# EUROPÄISCHE PATENTSCHRIFT

(11) **EP 0 312 855 B1**
(45) Veröffentlichungstag und Bekanntmachung des Hinweises auf die Patenterteilung: **23.02.1994**
(21) Anmeldenummer: 88116609.4
(22) Anmeldetag: 07.10.1988
(51) Int. Cl.: C11B 1/10, C11B 1/06, B01D 11/02

(54) **Verfahren und Vorrichtung zur Gewinnung von pflanzlichen Fetten und Ölen aus ölhaltigen Naturstoffen**
Process and apparatus for obtaining vegetable fats and oils from oleaginous natural substances
Procédé et appareil pour l'obtention de graisses et d'huiles végétales à partir de produits naturels oléagineux

(30) Priorität: 20.10.1987 DE 3735458
(43) Veröffentlichungstag der Anmeldung: 26.04.1989
(73) Patentinhaber: Dorr-Oliver Deutschland GmbH, D-41488 Grevenbroich (DE)
(72) Erfinder: Coenen, Hubert, Dr.-Ing., D-4300 Essen 1 (DE)
(74) Vertreter: Weber, Dieter, Dr.

(56) Entgegenhaltungen:
- EP-A- 0 012 687
- DE-A- 2 403 053
- FR-A- 1 212 905
- GB-A- 894 627
- TECHNISCHE MITTEILUNGEN KRUPP, Nr. 1, Juni 1988, Seiten 53-60, Essen, DE; W.-U. KOHLER et al.: "A new generation of Supraton machines"

## Beschreibung

Die Erfindung bezieht sich auf ein Verfahren zur Gewinnung von pflanzlichen Fetten und Ölen aus ölhaltigen Naturstoffen wir Saaten und Früchten, bei denen die Naturstoffe mit einem Lösungsmittel gemischt, extrahiert und anschließend Fette und/oder Öle abgetrennt werden sowie das Lösungsmittel in Kreislauf zurückgeführt wird. Die Erfindung bezieht sich ferner auf eine Vorrichtung zur Durchführung dieses Verfahrens.

Zur Gewinnung von pflanzlichen Fetten und Ölen aus Ölsaaten und Ölfrüchten werden verschiedene diskontinuierliche und kontinuierliche Verfahren eingesetzt. Je nach der Art des Naturproduktes ist vor der eigentlichen Verarbeitung ein Enthüllen oder Schälen erforderlich, da sich die Qualität des Öls erheblich vermindern kann durch schalenspezifische Stoffe (z. B. Wachse), die bei der Extraktion mit dem Lösungsmittel ins Öl gelangen.

Das früher häufig bei fettreichen Früchten und Saaten angewandte Fertigpressen, welches jedoch sehr kostenintensiv ist, hat erheblich an Bedeutung verloren, obwohl in einem einzigen Preßvorgang ein Restfettgehalt von 4 % erreichbar ist. Heutige Verfahren der kontinuierlichen Ölgewinnung bestehen in der Regel aus einer Kombination von Pressen und Extraktion mit Lösungsmitteln. Zuerst werden die ölhaltigen Naturstoffe auf einen Fettgehalt ca. 25 % vorgepreßt und dann auf einen Restgehalt von 1 % extrahiert. Bei Ölsaaten, deren Fettgehalt um etwa 20 % liegt, wird ohne Vorpressen direkt extrahiert.

Bei vielen pflanzlichen Rohstoffen ist bisher eine mechanische Vorzerkleinerung zur möglichst weitgehenden Zerstörung des Speichergewebes notwendig, um eine hohe Ausbeute zu erreichen. Öblicherweise wird die Saat vor dem Preßvorgang noch einer Konditionierung unterworfen, d.h. sie wird in eigens hierfür bereitgestellten Apparaten angefeuchtet und vorgewärmt. Durch diese Vorbehandlung wird das Öl dünnflüssiger und läuft beim Pressen besser ab, es wird darüber hinaus eine weitgehende Koagulation der Proteine erreicht und bei einer Temperatur über 80°C unerwünschte Enzym-Systeme und Mirkoorganismen inaktiviert. Bei Baumwollsaat ergibt sich durch die Konditionierung außerdem eine entgiftende Wirkung.

Heute allgemein üblich sind bei der Verarbeitung von Massenölsaaten und -früchten kontinuierlich arbeitende Seiherschneckenpressen, deren Funktionsprinzip der einschlägigen Literatur entnommen werden kann und die auch in den beiden Verfahren entsprechend der EP-B-0 129 739 und der EP-A-0 187 877 zum Einsatz kommen. Betriebliche Vergleiche haben deutlich gezeigt, daß im Prinzip eine bestimmte Schneckenausführung nur bei einer Saatsorte optimale Ergebnisse liefert. Selbst verschiedene Ernten führen zu unterschiedlichen Verarbeitungserfolgen, was zu erheblichen Kompromissen zwischen Qualitäts- und Betriebsanforderungen zwingt.

Durch die FR-A-1 212 905 ist ein Verfahren zur Gewinnung von pflanzlichen Fetten bzw. Ölen aus ölhaltigen körnigen Naturstoffen bekannt geworden, bei dem anstelle eines Preßvorganges eine zweistufige Extraktion mit einem Lösungsmittel vorgesehen ist. In der ersten Stufe werden die zerkleinerten ölhaltigen Körner mit einem Lösungsmittel in Wirkkontakt gebracht. Diese Mischung wird ausschließlich einer Trennstufe zugeführt, in der aufgrund der Dichteunterschiede die mit Rohöl beladene flüssige Phase von der festen Phase (Körner) getrennt wird. Die feste Phase wird in einer zweiten Stufe mittels einer Waschkolonne im Gegenstrom erneut mit dem Lösungsmittel in Wirkkontakt gebracht, wobei sich am Boden der Waschkolonne die ausgelaugte feste Phase ansammelt und sich am Kopf der Waschkolonne die flüssige Phase anreichert, die zusammen mit der flüssigen Phase aus der ersten Stufe einer weiteren Stufe zur Trennung des Lösungsmittels von den Fetten bzw. Ölen zugeführt wird.

Ein derartiges Verfahren besitzt keinen optimalen Trenneffekt (Ausbeute).

Als Extraktionsmittel wird heute in der Regel industriell fraktioniertes n-Hexan mit Siedegrenzen zwischen 55 und 70 °C verwendet. Für wenige Sonderfälle werden auch andere Lösungsmitttel eingesetzt. Darüber hinaus sind Verfahren bekannt zum Beispiel aus DE-A- 2 127 596 und der bereits zitierten EP-A-0 187 877 A 1 bei denen das Fett oder Öl mit überkritischen Gasen extrahiert wird.

Die Lösungsmittelabtrennung aus dem Rohöl erfolgt relativ leicht bei Temperaturen unter 100 °C und Vakuum, wobei die Restgehalte an Lösungsmittel im Öl unter der derzeitigen, analytischen Nachweisgrenze liegen. Aus dem Extraktionsrückstand, den Feststoffen werden die Lösungsmittel üblicherweise mit Dampf ausgetrieben.

Trotz vielfältiger Anstrengungen ist es bisher nicht gelungen, die Kombination von Pressen und Extraktion mit Lösungsmitteln bei kontinuierlichen Prozessen zu optimieren und auch nicht, eine zufriedenstellende Qualität des Endproduktes bei den unterschiedlichen Naturprodukten in einer gegebenen Anlage zu erreichen.

Der Erfindung liegt die Aufgabe zugrunde, die Wirtschaftlichkeit der Gewinnung von Fetten und Ölen aus Ölfrüchten und Ölsaaten gegenüber den bisherigen Verfahren zu steigern und zwar bei unterschiedlichen Arten und Sorten von Naturstoffen und dafür zu sorgen, daß der Verarbeitungserfolg, d. h. insbesondere die Qualtität des Öles weitestgehend unabhängig von der Art und Qualität der zu verarbeitende Naturprodukte gewährleistet werden kann.

Diese Aufgabe wird durch ein Verfahren nach Anspruch 1 gelöst. Durch die intensive Behandlung der Mischung aus Naturprodukt und Lösungsmittel im Scherfeld einer Rotor-Stator-Maschine kann in vielen Fällen auf eine Vorzerkleinerung ebenso wie auf eine Konditionierung verzichtet werden. Das hat den Vorteil, daß die mit der Konditionierung verbundene Gefahr einer Überhitzung vermieden wird, die dazu führen kann, daß der Preßkuchen in seinem Nährwert und das Öl in seiner farblichen und geschmacklichen Qualität so beeinträchtigt werden, daß sich hierdurch erheblich höhere Aufwände bei der nachfolgen Raffination und Bleichung der Öle ergeben. Schließlich kann auch ein zu hoher Feuchtigkeitsgehalt die Ölausbeute erheblich verschlechtern. Als Lösungs- bzw Extraktionsmittel ist für das Verfahren nach der Erfindung im allgemeinen Hexan vorgesehen, jedoch können bei bestimmten ölhaltigen Naturstoffen ggf. andere Lösungsmittel wie z. B. Äthanol, Isopropanol, Methylenchlorid u. ä. zweckmäßig sein. Der Vorteil des erfindungsgemäßen Verfahrens für die Gewinnung von Öl aus Ölsaaten und Ölefrüchten beruht darauf, daß in der Rotor-Stator-Maschine eine Kombination von Extraktion mit Lösungmitteln und gleichzeitiger Präparation der Ölsaaten und Ölfrüchte bis in den Bereich des Zellaufschlusses hinein erfolgt, wodurch das Prinzip der extremen Diffusionswegverkürzung für einen schnellen, intrazellularen Stoffstransports sorgt und es durch eine starke Dispersion der ölbehafteten Feststoffpartikel aus den zerstörten, öltragenden Samen-und Fruchtzellen und eine damit verbundene ständige Grenzflächenerneuerung zu einer für den Lösungseffekt von Öl im Lösungsmittel wichtigen Optimierung des Konzentrationsgradienten zwischen Öl und ölaufnehmender Lösungsmittelphase kommt. D.h. also, daß in diesem Verfahrenschritt neben dem Aufschluß und der Dispergierung der ölhaltigen Saat-oder Fruchtfleisch-Bruchstücke auch die Extraktion erfolgt. Hierdurch ergibt sich eine wesentliche Verkürzung der Gesamtbearbeitungszeit.

Vorteilhafterweise wird das Verfahren so geführt, daß die Extraktion in der Rotor-Stator-Maschine auf einem Temperaturniveau erfolgt, das zwischen Raumtemperatur und wenige Grade unter der Siedegrenze des Lösungsmittels liegt.

Auch wenn eine Vorzerkleinerung und eine Konditionierung bei dem erfindungsgemäßen Verfahren in vielen Fällen nicht notwendig ist, kann es je nach zu verarbeitender Saat- oder Fruchtfleischsorte auch sinnvoll sein, wenn vor Eintritt in den hier beschriebenen Prozeß eine Vorkonditionierung und evtl. eine Vorzerkleinerung des Einsatzgutes erfolgt. Das erfindungsgemäße Verfahren läßt sowohl eine zur Konditionierung der Ölsaaten und -früchte notwendige Wärmebehandlung als auch eine Teilzerkleinerung in einer vorgeschalteten Rotor-Stator-Maschine mit entsprechend ausgebildetem Rotor-/Stator-System zu, wobei für die Wärmebehandlung die Zufuhr von Heißdampf in das Naturprodukt direkt über das Statorelement an geeigneter Stelle oder aber vor dem eigentlichen Eintritt des Naturproduktes in diese Dispergier- und Extraktionsmachine erfolgen kann. Das erfindungsgemäße Verfahren kann selbstverständlich auch zur Verarbeitung von vorgepreßten Ölsaaten und Ölfrüchten mit großem Vorteil eingesetzt werden.

Es kann vorteilhaft sein, das Verfahren nach Anspruch 3 auszuführen. Hierbei wird die Feststoffphase bei kontinuierlichen Prozessen in einzelnen, hintereinandergeschalteten Extraktionsstufen mit dem jeweils im Gegenstrom zurückgeführten, mit Öl teilbeladenen Lösungsmittel erneut einer intensiven Bearbeitung, Mischung und Extraktion unterworfen. Es ist damit möglich einen für jede Stufe optimalen Konzentrationsgradienten und eine stufenweise Anreicherung der Lösungsmittelphase mit Öl zu erreichen.

Das Restlösungsmittel aus der Feststoffphase der letzten Extraktionsstufe wird vorteilhaft durch thermische Behandlung ausgetrieben, in einem Kondensator verflüssigt und rückgeführt. Das Austreiben des Restlösungsmittels geschieht vorzugsweise bei Umgebungsdruck und Temperaturen unter 100 °C. Die Wiedereinspeisung des Restlösungsmittels erfolgt vorzugsweise zusammen mit dem reinem Lösungsmittel aus der Destillationsstufe in den Vormischer der letzten Stufe, kann jedoch selbstverständlich je nach Erfordernis an jeder anderen Stelle des Prozesses erfolgen.

In Fällen, in denen die aus der ersten Rotor-Stator-Maschine austretende Suspension einen hohen Anteil an Feinstpartikeln aufweist, ist die Ausgestaltung nach Anspruch 5 für den sicheren und störungsfreien Betrieb der Destillationskolonne von besonderem Vorteil.

Zur Lösung der Aufgabe und zur Durchführung des erfindungsgemäßen Verfahrens ist eine Vorrichtung nach Anspruch 6 vorgesehen, in der eine gleichzeitige Bearbeitung, Mischung und Extraktion erfolgt. Dies wird dadurch erreicht, daß in der Rotor-Stator-Maschine der Krafteintrag in die ölhaltigen Zellen zum Aufschluß derselben sowohl durch ein rein mechanisches Einwirken von einem konstruktiv speziell ausgelegten, drehenden Element gegen ein ebenfalls entsprechend ausgelegtes, feststehendes Gegenstück als auch durch das Lösungsmittel selbst erfolgt. Die Rotor-Stator-Maschine, in der neben dem Aufschluß und der Dispergierung der öltragenden Saat- und Fruchtfleischbruchstücke auch die Extraktion erfolgt, daher auch als Homogenisier- und Extraktionsmaschine bezeichnet, arbeitet mit einem Rotor-/Stator-Werkzeug, wobei je nach Anforderung hinsichtlich der Kontruktion und der Wirkungsweise unterschiedliche Rotor-/Stator-Systeme zum Einsatz kommen können, und zwar im Falle eines mehrstufigen Prozesses in allen Stufen.

Je nach zu verarbeitendem Naturrohstoff kann es auch sinnvoll sein, wenn vor dem Eintritt in den hier beschriebenen, erfindungsgemäßen Prozeß eine Konditionierung und evtl. eine Vorzerkleinerung des Einsatzgutes erfolgt. Dies geschieht dadurch, daß der Vorrichtung nach Anspruch 6 eine weitere Rotor-Stator-Maschine mit entsprechend ausgebildetem Rotor-/Stator-System vorgeschaltet ist, in der eine Teilzerkleinerung ebenso wie eine zur Konditionierung der Ölsaaten und -früchte notwendige Wärmebehandlung möglich ist, wobei für die Wärmebehandlung die Zufuhr von Heizdampf in das Naturprodukt direkt über die Statorelemente der Rotor-Stator-Maschine an geeigneter Stelle oder aber vor dem eigentlichen Eintritt des Naturproduktes in diese Dispergier- und Extraktionmaschine erfolgen kann.

Vorteilhaft ist die Wahlmöglichkeit zwischen verschiedenen Rotor-/Stator-Systemen je nach zu verarbeitendem Produkt. Die folgenden Werkzeugtypen stehen zur Verfügung und können in der Rotor-Stator-Maschine bei einem Produktwechsel ohne besonderen Aufwand gegeinander ausgetauscht werden.

Zur Zerkleinerung kann ein konisch ineinandergreifendes, mit Längstnuten in radialer Richtung versehenes Rotor-/Stator-System, als Kegelsystem bezeichnet, verwendet werden. Die Spaltbreite zwischen dem konischen Rotor und dem ebenfalls konischen Stator läßt sich für eine gewünschte Saat- bzw. Fruchtfleisch-Partikelgröße beliebig verstellen. Auch erfolgt in diesem Rotor-/Stator-System schon eine innige Vermischung mit dem Lösungsmittel (z. B. Hexan).

Desweiteren kann ein aus konzentrischen Ringen aufgebautes Rotor-/Stator-System verwendet werden¸ wobei die konzentrischen Ringe von Rotor und Stator mit radialen Schlitzen versehen sind und ineinandergreifen. Auch in diesem System, welches als Kammerwerkzeug bezeichnet wird, werden die ölhaltigen Naturstoffe gemeinsam mit dem Lösungsmittel mittig in das Rotor-/Stator-System aufgegeben. Der mittig aufgegebenen Slurry aus Naturstoffen und Lösungsmittel wird vom Rotor eine Zentrifugalkraft aufgeprägt, die die Dispersion in radialer Richtung zu dem am Umfang befindlichen Auslauf aus der Maschine treibt. Auf seinem Weg durch das Rotor-/Stator-System wird das Einzelpartikel der Slurry der Einwirkung von Reib-, Scher- und Schubbeanspruchungen unterworfen. Außerdem erfahren die diskreten Volumina der Slurry auf ihrem Weg durch die engen Kanäle des Kammerwerkzeugs extreme Richtungs- und Beschleunigungsänderungen, die in Abhängigkeit von der Drehzahl des Rotors und der Anzahl der eingebrachten, radialen Schlitze zu hochfrequenten Mikrokavitationen in den diskreten Volumina der Slurry führen und damit eine Zellcrackung der ölhaltigen Zellen herbeiführen. Desweiteren erfolgt eine innige Durchmischung von Feststoffpartikeln und Lösungsmittel und damit eine extreme Verbesserung der Lösungskinetik beim Extraktionsprozeß.

Ein weiteres Rotor-/Stator-System ist mit zusätzlichen, konzentrischen Zylinderflächen aufgebaut, in die radiale Bohrungen eingebracht sind.Die Bohrungsgröße ist strömungstechnisch so ausgelegt, daß die durch sie hindurchtretende Slurry wie bei einer Düsenströmung so stark beschleunigt wird, daß der Slurry-Strahl beim Verlassen des Bohrungskanals in viele extrem kleine, diskrete Tropfen in die sich dahinter befindliche Slurry zerstäubt und in diese dispers verteilt wird. Das hat den Vorteil, daß vorher gebildete Agglomerate von öltragenden Feststoffpartikeln zerstört werden und damit eine Grenzflächenerneuerung mit einem optimierten Stoffaustauch hinsichtlich des Öltransportes vom Feststoffpartikel in das Lösungsmittel erreicht wird.

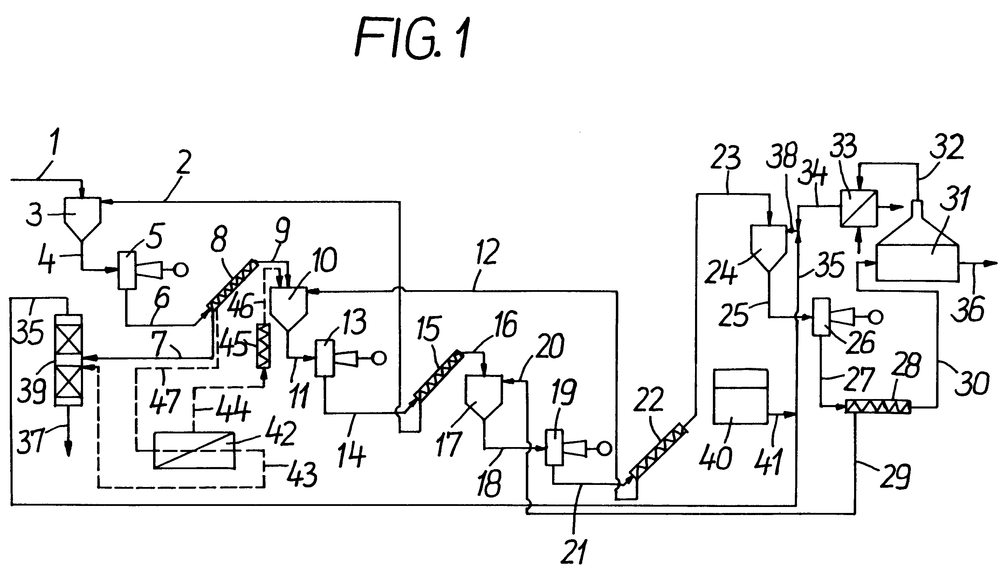

Ein Ausführungsbeispiel des erfindungsgemäßen Verfahrens und der Vorrichtung zu seiner Durchführung ist in den Figuren 1 bis 5 dargestellt und im folgenden näher beschrieben, wobei jedoch auf Details, die sich für den Fachmann von selbst ergeben, wie z. B. übliche Förder-, Meß- und Regelsystem und deren Verbindungen, verzichtet wurde. Es zeigt
- Fig. 1: ein Prozeß-Ablaufschema
- Fig. 2: ein Kegelwerkzeug für eine Rotor-Stator-Maschine
- Fig. 3: ein Kammerwerkzeug für eine Rotor-Stator-Maschine
- Fig. 4: ein Düsen- oder Lochwerkzeug für eine Rotor-Stator-Maschine
- Fig. 5.: den schematischen Werkzeugaufbau eines Rotor-/Stator-Systems und den Partikel-Verlauf

Einem trichterförmigen Vormischer 3 wird über die Zuführung 1 das ölhaltige Naturprodukt in Form von Ölsaaten oder Ölfrüchten - vorbehandelt oder nicht vorbehandelt - zugeführt und dort mit einem mit Öl teilbeladenen Lösungsmittel, welches den Vormischer 3 aus dem Entmischer 15 über die Zulaufleitung 2 erreicht, vermischt. Über die Leitung 4 wird das Gemisch der nach dem Rotor-/Stator-Prinzip arbeitenden Homogenisiter-und Extraktionsmaschine 5 zugeführt, wo sich die teilbeladene Lösungsmittelphase bis auf eine maximale Beladung mit Öl, welches dem Feststoff entzogen wird, auflädt. Zur Trennung von Feststoff und beladener Lösungmittelphase wird das Feststoff-Lösungsmittel-Gemisch über die Leitung 6 einem Entmischer 8 zur Grobtrennung von Feststoff und Lösungsmittel zugeführt. Im konkreten Fall ist dieser Entmischer als Seiherschneckenförderer aufgeführt, so daß gleichzeitig mit der Fest-Flüssig-Trennung die Förderung des Feststoffes erfolgt. Über die Leitung 7 wird aus dem Entmischer 8 die Lösungsmittelphase mit maximal möglicher Ölbeladung einer Destillationskolonne 39 zur Trennung von Speiseöl und Lösungsmittel zugeführt, die vorzugsweise als Vakuum-Destillationskolonne betrieben wird. Das Öl wird durch die Leitung 37 aus der Destillationskolonne 39 abgezogen. Das reine Lösungsmittel, welches die Destillationskolonne 39 als Kopfprodukt über die Leitung 35 verläßt, wird dem letzten Vormischer 24 als von allen Ölen befreite, reine Lösungsmittelphase zugeführt.

In Abhängigkeit von der Beschaffenheit des eingesetzten, ölhaltigen Naturstoffes kann sich aufgrund eines Anteils von Feinstpartikeln in der aus dem Entmischer 8 austretenden, mit Öl beladenen Lösungsmittelphase die Notwendigkeit ergeben, daß diese Lösungsmittelphase vor der Weiterverarbeitung in der Destillationsklonne 39 über die Leitung 47 einem Filter 42 zugeführt wird, in welchem sie von diesem Feststoffanteil befreit wird. Anschließend erfolgt die Aufgabe der beladenen Lösungsmittelphase über die Leitung 43 in die Destillierkolonne 39. Der stark ölhaltige Filterkuchen wird aus dem Filter 42 kontinuierlich entnommen, über die Leitung 44 mit einer, hier als Schneckenförderer ausgebildeten Fördereinrichtung 45 und die Leitung 46 in den Vormischer 10 zurückgespeist, wo er einem weiteren Extraktionsvorgang unterworfen wird und im nachfolgenden Seiherschneckenförderer 15 unter Bildung von Agglomeraten mit grobem Feststoff weitesgehend dem Weg des Feststoffes durch den Prozeß folgt und in der letzten Stufe zusammen mit dem Extraktionrückstand den Prozeß bei 36 verläßt.

Die in der ersten Stufe teilentölte Feststoffphase wird über die Leitung 9 dem zweiten Vormischer 10 zugeführt und dort mit dem teilbeladenen Lösungsmittelstrom aus dem als Seiherschneckenförderer ausgeführten Entmischer 22 über die Zuleitung 12 vorvermischt. Die Slurry wird sodann zum Zwecke der intensiven Vermischung, Bearbeitung und Extraktion über die Leitung 11 der zweiten, nach dem Rotor-/Stator-Prinzip arbeitenden Homogenisier- und Extraktionsmaschine 13, zugeführt. Dieser Rotor-Stator-Maschine 13 nachgeschaltet ist ein weiterer, als Seiherschneckenförderer ausgeführter Entmischer 15, der über die Zuleitung 14 mit der innig im Stoffaustausch befindlichen Slurry gespeist wird und eine Trennung von der mit Speiseöl beladenen Lösungsmittelphase und Feststoff durchführt. Die sich anschließende weitere Extraktionsstufe entspricht der vorhergehenden und besteht aus Zuleitung 16, Vormischer 17, Leitung 18, Rotor-Stator-Maschine 19, Zuführung 20 und Leitung 21, über die die Mischung aus Feststoff und Lösungsmittelphase dem Entmischer 22 zugeführt wird.

Über die Zuleitung 23 wird der letzte Vormischer 24 mit der in den Vorstufen schon stark entölten Feststoffphase beschickt, wobei der über die Leitung 35 aus der Destillierkolonne 39 kommende Hauptstrom des entölten Lösungsmittels mit dem aus dem Kondensator 33 über die Leitung 34 kommenden Teilstrom zur Gesamt-Lösungsmittelphase zusammengeführt und über Leitung 38 ebenfalls dem Vormischer 24 zugeführt wird. Von dort wird die Slurry über die Leitung 25 der Homogenisier- und Extraktionsmaschine 26 zu einem letzten Extraktionsschritt zugeführt. Über die Leitung 27 wird die Slurry dem Entmischer 28, der wie die anderen Entmischer 8, 15 und 22 nach dem Prinzip des Seiherschneckenförderers arbeitet, zugeführt. Hier erfolgt eine weitgehende Trennung von Feststoff und teilbeladener Lösungsmittelphase. Während die teilweise mit Öl beladene Lösungsmittelphase über die Leitung 29 abgezogen und im Gegenstrom zum Feststofffluß den vorgeschalteten Trennstufen zugeführt wird, z. B. hier über die Zuführung 20 zum Vormischer 17, wird über die Leitung 30 der quasi entölte Feststoff (Ölgehalt < 1 %) einem Lösungsmittel-Austreiber 31, vorzugsweise einem Fließbettverdampfer zugeführt, in dem unter Wärmeeinwirkung das im Feststoff gelöste Lösungsmittel (z. B. Hexan) ausgetrieben und über die Leitung 32 zum Zwecke der Rückgewinnung im Kondensator 33 kondensiert und über die Leitung 34 in den Lösungsmittelkreislauf zurückgeführt wird. Die getrockneten Feststoffe werden über die Leitung 36 abgezogen.

Im Prozeß auftretende Leckagen und sonstige, produktionsgemäß bedingte Lösungsmittelverluste werden aus dem Lösungsmittelvorrat 40 über die Leitung 41 ausgeglichen.

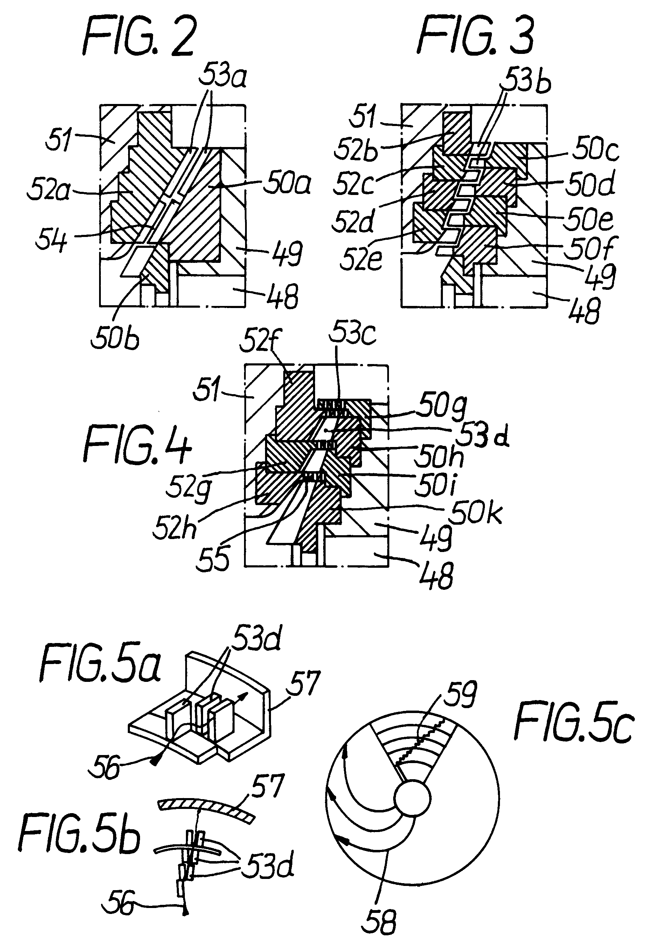

In den Figuren 2 bis 4 sind Ausführungsformen des Rotor-/Stator-Systems dargestellt für spezielle Einsatzfälle entsprechend den Anforderungen, die sich aus den unterschiedlichen Naturprodukten und den verschiedenen Verfahrensstufen ergeben. Auf einer Rotorwelle 48 ist jeweils ein Rotor 49 befestigt, der den bzw. die Rotorringe 50 trägt. Ihnen gegenüber bzw. ineinandergreifend sind die an dem jeweiligen Stator 51 befestigten Statorringe 52 angeordnet. In die Rotorringe 50 und Statorringe 52 sind die eigentlichen Werkzeuge 53 bzw. 54 eingearbeit, die das Scherfeld des jeweiliegen Rotor-/Stator-Systems bilden.

Im Falle des Kegelwerkzeuges Fig. 2 ist das Rotor-/Stator-System konisch ausgebildet, wobei die Werkzeuge 53 a nicht ineinandergreifen und einen durch axiales Verschieben z. B. des Stators 51 veränderbaren Spalt 54 bilden.

Auch bei dem in Fig. 3 dargestellten Kammerwerkzeug ist das Rotor-/Stator-System grundsätzlich konisch ausgebildet, jedoch greifen hier die in die Rotor- bzw. Statorringe 50 c bis f bzw. 52 b bis e eingearbeiteten, das Scherfeld bildenden Werkzeuge 53 b ringförmig ineinander. Hierdurch ergeben sich die dem Einsatzzweck entsprechendem, vom Kegelwerkzeug abweichenden Eigenschaften.

Auch bei dem Düsen- bzw. Lochwerkzeug, dargestellt in Fig. 4, greifen die in die Rotor- bzw. Statorringe 50 g bis k bzw. 52 f bis h eingearbeiteten Werkzeuge 53 c bzw. d ringförmig ineinander, wobei die rotorseitigen Werkzeuge 53 d auch hier Kammern aufweisen, die statorseitigen Werkzeuge 53 c jedoch mit Bohrungen 55 versehen sind. Auch der äußerste Rotorring 50 g ist mit Bohrungen 55 versehen. Die besonderen Eigenschaften dieses Rotor-/Stator-Systems ergeben sich aus der Düsenwirkung dieser Bohrungen 55.

In den Fig. 5 a und b ist der Partikelverlauf 56 in einem Rotor-/Stator-System schematisch dargestellt. Die einzelnen Stoffteilchen werden auf ihrem Weg 56 bzw. 59 von innen nach außen durch die Werkzeuge 53 d mehrfach beschleunigt, verzögert und umgelenkt. Hierauf beruht die beschriebene, hohe Zerkleinerungs-, Dispergier-und Extraktionsleistung der Rotor-Stator-Maschine für die Ölgewinnung. Restliche, noch existierende Agglomerationsteilchen werden beim Auftreffen auf die Gehäusewand 57 weiter zerteilt.

In Fig. 5 c ist die Bahnkurve 58 eines Partikels in einer herkömmlichen Rotor-Stator-Maschine dem Weg 59 eines Partikels im Rotor-/Stator-System einer Maschine entsprechend der Erfindung gegenübergestellt.

## Patentansprüche

1. Verfahren zur Gewinnung von pflanzlichen Fetten und Ölen aus ölhaltigen Naturstoffen wie Saaten und Früchten, bei dem die Naturstoffe mit einem Lösungsmittel gemischt, extrahiert und anschließend Fette und/oder Öle abgetrennt werden sowie das Lösungsmittel im Kreislauf zurückgeführt wird, **dadurch gekennzeichnet**, daß die Naturstoffe mit einer dem Prozeß entnommenen Lösungsmittelphase vorvermischt werden und diese Mischung zur intensiven Bearbeitung, Mischung und Extraktion in das Scherfeld mindestens einer Rotor-Stator-Maschine (5) eingeführt wird, wobei sich die Lösungsmittelphase mit Öl- und/oder Fettbestandteilen belädt, die der Feststoffphase entzogen werden, und daß die die Rotor-Stator-Maschine (5) verlassende Suspension aus mit Öl bzw. Fett beladenem Lösungsmittel und Feststoffen in einem nachgeschalteten Entmischer (8) getrennt und anschließend in einer Destillationskolonne (39) die Lösungsmittel aus den Ölen bzw. Fetten abgeschieden werden.

2. Verfahren nach Anspruch 1, dadurch gekennzeichnet, daß die Naturstoffe vorbehandelt sind durch Vorzerkleinern, Konditionieren sowie Vorpressen je allein oder in Kombination.

3. Verfahren nach Anspruch 1 oder 2, dadurch gekennzeichnet, daß die Vormischung sowie die anschließende Bearbeitung und Extraktion kontinuierlich in einer oder mehreren Stufen erfolgen und die mit Öl beladene Lösungsmittelphase im Gegenstrom zur Feststoffphase geführt wird.

4. Verfahren nach einem der Ansprüche 1 bis 3, dadurch gekennzeichnet, daß das Restlösungsmittel aus der Feststoffphase der letzten Extraktionsstufe durch thermische Behandlung ausgetrieben, verflüssigt und rückgeführt wird.

5. Verfahren nach einem der Ansprüche 1 bis 4, dadurch gekennzeichnet, daß die ölbeladene Flüssigphase des ersten Entmischers (8) zur Abtrennung feindispergierter Feststoffpartikel vor der Einspeisung in die Destillationskolonne (39) filtriert wird, und daß im Falle mehrstufiger Behandlung der Filterkuchen dieser Filtrationsstufe (42) der Vormischung der nachfolgenden Stufe aufgegeben wird.

6. Vorrichtung zur Durchführung des Verfahrens nach Anspruch 1, dadurch gekennzeichnet, daß ein erster Vormischer (3) mit Zuführungen für öl- oder fetthaltige Naturstoffe (1) und Lösungsmittel (2) über eine Rohrleitung (4) mit einer Rotor-Stator-Maschine (5) verschaltet ist, deren Austritt über eine Leitung (6) mit einem Entmischer (8) verbunden ist, und daß der Austritt für die Flüssigphase über eine Leitung (7) dieses Entmischers (8) mit einer Destillationskolonne (39) verbunden ist.

7. Vorrichtung nach Anspruch 6, dadurch gekennzeichnet, daß je nach Anforderungen an den Aufschluß der Naturstoffe in der Rotor-Stator-Maschine (5) unterschiedliche Rotor-Stator-Syteme, als Werkzeuge zum Einsatz kommen wie z. B. Kegelwerkzeuge, Kammerwerkzeuge und Düsen- bzw. Lochwerkzeuge, die bei Produktwechsel gegeneinander austauschbar sind.

8. Vorrichtung nach Anspruch 6 oder 7, dadurch gekennzeichnet, daß zwischen dem Austritt der Flüssigphase des Entmischers (8) und der Destillationskolonne (39) ein Filter (42) angeordnet ist.

9. Vorrichtung nach einem der Ansprüche 6 bis 8, dadurch gekennzeichnet, daß die Feststoffaustritte sowohl des Entmischers (8) als auch des Filters (42), letzterer ggf. mit zwischengeschalteter Fördereinrichtung (45) über Leitungen (9 bzw. 44 u. 46) mit einem zweiten Vormischer (10) verbunden sind.

10. Vorrichtung nach einem der Ansprüche 6 bis 9, dadurch gekennzeichnet, daß im Falle mehrstufiger Behandlung der ersten Stufe eine oder mehrere Extraktionsstufen nachgeschaltet sind, die jeweils aus einem Vorgefäß mit damit verbundener Rotor-Stator-Maschine und Entmischer bestehen, dessen Flüssigphasenaustritt jweils mit der vorhergehenden Stufe und dessen Feststoffaustritt jeweils mit der nach-folgenden Stufe verbunden ist.

11. Vorrichtung nach einem der Ansprüche 6 bis 10, dadurch gekennzeichnet, daß der Entmischer (28) der letzten Extraktionsstufe mit seinem Flüssigphasenaustritt mit dem Vormischer (17) der vorhergehenden Stufe verbunden ist und der Feststoffaustritt mit einem Lösungsmittel-Austreiber (31), der gasaustrittsseitig über einen Kondensator (33) mit dem Vormischer (24) der vorhergehenden Stufe verbunden ist.

## Claims

1. Process for obtaining vegetable fats and oils from oleaginous natural substances such as seeds and fruits, wherein the natural substances are mixed with a solvent, extracted and fats and/or oils subsequently separated off and the solvent is recirculated, characterised in that said natural substances are pre-mixed with a solvent phase removed from the process and this mixture is passed into the shearing field of at least one rotor-stator machine (5) for intensive processing, mixing and extraction, whereby said solvent phase is laden with oil and/or fat constituents drawn off from the solid phase, and that the suspension of solvent laden with oil or fat and solids leaving said rotor-stator machine (5) is separated in a separator (8) connected downstream and then the solvents are expelled from the oils or fats in a distilling column (39).

2. Process according to Claim 1, characterised in that the natural substances are pre-treated by initial crushing, conditioning and pre-pressing, either one or a combination thereof.

3. Process according to Claim 1 or 2, characterised in that the initial mixing and the subsequent processing and extraction are conducted continuously in one or several stages and the oil-laden solvent phase is returned in counterflow to the solid phase.

4. Process according to one of Claims 1 to 3, characterised in that the residual solvent is expelled from the solid phase of the last extraction stage by thermal treatment, liquified and recirculated.

5. Process according to one of Claims 1 to 4, characterised in that the oil-laden liquid phase of the first separator (8) is filtered to separate off extraneous, dispersed solid particles before being fed into the distilling column (39), and that, in the case of multiple-stage treatment, the filter cake of this filtration stage (42) from the pre-mixture is passed on to the subsequent stage.

6. Apparatus for implementing the process according to Claim 1, characterised in that a first pre-mixer (3) with supply pipes for oleaginous or fatty natural substances (1) and solvent (2) is connected upstream of the rotor-stator machine (5) via pipe (4), the outlet of which is connected by a pipe (6) to a separator (8), and that the outlet for the liquid phase is connected via a pipe (7) of this separator (8) to the distilling column (39).

7. Apparatus according to Claim 6, characterised in that, depending on the requirements for breaking down the natural substances in the rotor-stator machine (5), various rotor-stator systems may be used as tools, e.g. cone tools, chamber tools and nozzle or holed tools, which may be substituted for one another when the product is changed.

8. Apparatus according to Claim 6 or 7, characterised in that a filter (42) is arranged between the outlet of the separator (8) for the liquid phase and the distilling column (39).

9. Apparatus according to one of Claims 6 to 8, characterised in that the solid outlets of both the separator (8) and the filter (42), the latter optionally provided with intermediate transport means (45), are connected by pipes (9 or 44 and 45) to a second pre-mixer (10).

10. Apparatus according to one of Claims 6 to 9, characterised in that in the case of multiple-stage treatment, one or several extraction stages are connected downstream of the first stage, each comprising a preliminary vessel with connected rotor-stator machine and separator, the outlet of said separator for the liquid phase being connected with the previous stage and its outlet for the solid phase connected to the subsequent stage.

11. Apparatus according to one of Claims 6 to 10, characterised in that the separator (28) of the last extraction stage with its outlet for the liquid phase is connected to the pre-mixer (17) of the previous stage and the solid outlet to a solvent separator (31), which is connected on the gas outlet side via a condenser (33) to the pre-mixer (24) in the previous stage.

## Revendications

1. Procédé d'extraction de graisses et huiles végétales à partir de produits naturels oléagineux, comme des graines ou des fruits, dans le cas duquel les produits naturels sont mélangés à un solvant, sont soumis à une extraction, puis ensuite des graisses et/ou des huiles sont séparées et le solvant est recyclé, caractérisé en ce que les produits naturels sont préalablement mélangés avec une phase de solvant soutiré du process, et ce mélange est introduit, pour être, de façon intensive, traité mélangé et soumis à l'extraction, dans le champ de cisaillement d'au moins une machine à rotor et stator (5), étant entendu que la phase de solvant se charge de constituants huile et/ou graisse, qui sont extraits de la phase solide, et en ce que la suspension quittant la machine à rotor et stator (5), et composée de solvant chargé d'huile et de graisse, et les matières solides sont séparées dans un ségrégateur (8), puis les solvants sont débarrassés des huiles et graisses dans un colonne de distillation (39).

2. Procédé suivant la revendication 1, caractérisé en ce que les produits naturels sont prétraités par fragmentation préalable, par conditionnement, ainsi que par précompression, individuellement ou en mélange.

3. Procédé suivant la revendication 1 ou la revendication 2, caractérisé en ce que le prémélange, ainsi que la préparation et l'extraction qui lui font suite, ont lieu en continu dans un ou dans plusieurs étages, et en ce que la phase de solvant chargée en huile est envoyée, à contre-courant, vers la phase solide.

4. Procédé suivant l'une quelconque des revendications 1 à 3, caractérisé en ce que le solvant résiduaire est extrait de la phase solide du dernier étage d'extraction par traitement thermique, puis liquéfié et recyclé.

5. Procédé suivant l'une quelconque des revendications 1 à 4, caractérisé en ce que la phase liquide chargée en huile du premier ségrégateur (8) est filtrée pour séparer les particules solides finement dispersées, avant d'alimenter la colonne de distillation (39), et en ce que, dans le cas d'un traitement en plusieurs étages, le gâteau filtré de cet étage de filtration (42) est envoyé au prémélange de l'étage suivant.

6. Dispositif pour la mise en oeuvre du procédé suivant la revendication 1, caractérisé en ce qu'un premier prémélangeur (3), comportant des conduites d'alimentation pour les produits naturels (1) contenant des huiles et des graisses et pour le solvant (2), est raccordé, par une conduite tubulaire (4), à une machine à rotor et stator (5), dont la sortie est reliée, par une conduite (6), à un ségrégateur (8), et en ce que la sortie pour la phase liquide est reliée, par une conduite (7) de ce ségrégateur (8), à une colonne de distillation (39).

7. Dispositif suivant la revendication 6, caractérisé en ce que, suivant les besoins en ce qui concerne la dissociation des produits naturels, dans la machine à rotor et stator (5), on peut mettre en oeuvre, comme outillage, différents systèmes à rotor et stator, comme, par exemple; des outils coniques, des outils à alvéoles, et des outils à buses ou à perforations, que l'on peut échanger les uns contre les autres si on change de produits.

8. Dispositif suivant la revendication 6 ou la revendication 7, caractérisé en ce qu'un filtre (42) est disposé entre la sortie de la phase liquide du ségrégateur (8) et la colonne de disrillation (39)

9. Dispositif suivant l'une quelconque des revendications 6 à 8, caractérisé en ce que les sorties de produits solides, aussi bien du ségrégateur (8) que du filtre (42), cette dernière, comportant le cas échéant une installation de transport (45) intercalée, sont reliées par des conduites (respectivement 9, 44 et 46) à un deuxième prémélangeur (10).

10. Dispositif suivant l'une quelconque des revendications 6 à 9, caractérisé en ce que, dans le cas d'un traitement en plusieurs étages, au premier étage font suite un ou plusieurs étages d'extraction, qui sont chacun constitués d'un récipient intermédiaire comportant une machine à rotor et stator reliée à lui et un ségrégateur, dont chaque sortie concernée de la phase liquide est reliée à l'étage précédent et dont chaque sortie concernée des matières solides est reliée à l'étage suivant.

11. Dispositif suivant l'une quelconque des revendications 6 à 10, caractérisé en ce que le ségrégateur (28) du dernier étage d'extraction est relié, avec sa sortie pour sa phase liquide, au prémélangeur (17) de l'étage précédent et en ce que la sortie pour les matières solides est reliée à un extracteur de solvant (31), qui est relié, côté sortie des gaz, au prémélangeur (24) de l'étage précédent, par l'intermédiaire d'un condenseur (33).
